# FASCICULE DE BREVET EUROPEEN

(11) **EP 1 768 772 B1**
(45) Date de publication et mention de la délivrance du brevet: **08.10.2008**
(21) Numéro de dépôt: 05773023.6
(22) Date de dépôt: 27.05.2005
(51) Int. Cl.: B01F 7/04, A21C 1/14

(54) **DISPOSITIF DE PETRISSAGE, DE FERMENTATION LENTE ET DE PRODUCTION DE LEVAIN PATEUX**
VORRICHTUNG ZUM KNETEN SOWIE ZUR LANGSAMEN GÄRUNG UND HERSTELLUNG VON SAUERTEIG
DEVICE FOR KNEADING, SLOWLY FERMENTING AND PRODUCING SOURDOUGH

(30) Priorité: 28.05.2004 FR 0405776; 29.03.2005 FR 0503005
(43) Date de publication de la demande: 04.04.2007
(73) Titulaire: Loiselet, Michel, 12490 Montjaux (FR)
(72) Inventeur: Loiselet, Michel, 12490 Montjaux (FR)
(74) Mandataire: Schmitt, John
(86) Numéro de dépôt international: PCT/FR2005/001305
(87) Numéro de publication internationale: WO 2005/118120

(56) Documents cités:
- WO-A-01/06857
- DE-C- 665 904
- FR-A- 2 443 206
- GB-A- 317 918
- GB-A- 677 027
- US-A- 1 686 967
- US-A- 3 363 883
- US-B1- 6 503 550
- PATENT ABSTRACTS OF JAPAN vol. 1999, no. 12, 29 octobre 1999 (1999-10-29) & JP 11 196758 A (SHOWA SANGYO CO LTD; MUSASHINO SHOJI:KK), 27 juillet 1999 (1999-07-27)

## Description

### Domaine de l'invention

La présente invention concerne le secteur du pétrissage, de la fermentation lente des pâtons nécessitant du stockage et de la production de levains pâteux, des pâtes viscoélastiques à températures et hygrométries contrôlées/régulées, notamment pour les artisans boulangers, les semi-industries, les petites, moyennes et grandes surfaces, les laboratoires notamment en meunerie, les viennoiseries, les biscotteries, les briocheries, les biscuiteries ainsi que certaines industries agro-alimentaires visant l'évolution de la saveur, la régularité, la plus longue conservation par restructuration économique des fournils existants disposant généralement de surfaces limitées et la création de nouveaux types de fournils, laboratoires et sites de production en biotechnologie.

### Etat de la technique

Actuellement, la fermentation hors pétrin des pâtes et pâtons est assurée dans des chambres de fermentation/refroidissement programmables et réglables en température/hydratation assurant selon les réglages le maintien et la pousse contrôlés des pâtons stockés et parfois de levain pâteux en masse. Ces dispositifs sont toutefois encombrant et onéreux.

On connaît des dispositifs de pétrissage malaxage à cuve horizontale basculante comprenant un seul bras tournant a deux branches hélicoïdales inversées (pétrin dénommé "simple Z") utilisé en secteur biscuiterie pour des pâtes consistantes peu élastiques, tout comme le pétrin malaxeur horizontal à deux outils, à deux branches à mouvements contrarotatifs (dénommé «double Z ») à fort cisaillement des fibres, peu compatible aux pâtes de panification très fragiles, tout comme en type de pétrin vertical à cuve non tournante toujours à mouvements d'outils contrarotatifs tels que ceux décrits dans le document FR-A-0240842.

On connaît aussi des pétrins malaxeurs et pétrins réacteurs fermenteurs horizontaux à cuve non tournante; à un outil tournant et à un outil fixe tels que ceux décrits dans les documents FR-A-2710551 et PCT WO 00/51438 et FR-A-2759863.

On sait que les pétrins réacteurs fermenteurs horizontaux, tels que ceux décrits dans le PCT WO 00/51438, permettent en plus des pétrissages des pâtes à ~24° sur des temps: courts, de fabriquer après pétrissage des levains pâteux ~13° sur des temps longs (pendant les temps de repos des professionnels) à partir d'un système de refroidissement relié à une cuve à double enveloppe isolée du pétrin réacteur fermenteur : Ensemble spécifique relativement onéreux qui se déclenche par cycles selon les écarts de température des levains pâteux (8/14°) et qui déclenche les écarts de température des levains pâteux (8/14°) et qui déclenche également la rotation lente du bras tournant comme un cycle de réfrigérateur.

On connaît aussi d'autres types de pétrins malaxeurs à cuve tournante à axe vertical ou oblique ne travaillant généralement que dans un tiers du volume de pâte à flux renouvelé dans une cuve fixe ou sortante sur chariot tels que ceux décrits dans les documents FR-A-519267 et EP-0354190.

On sait que les pétrins malaxeurs à un seul outil tournant concentriquement dans une cuve non tournante ont une plage de pétrissage malaxage très limitée en terme de viscoélasticité des pâtes et que, d'autre part, l'outil en rotation entraîne souvent la masse de pâte en rotation limitant ainsi l'action de pétrissage avec pour autre conséquence une modification des temps de travail ou, plus souvent, une variation de qualité des résultats.

On sait également que les pétrins malaxeurs à deux outils contrarotatifs ou à outil tournant et outil non tournant dans une cuve ont tendance à arracher les fibres des pâtes de panification malgré une efficacité de malaxage. Document US-A-3 363 883 décrit un dispositif selon le préambule de la revendication 1.

### Objet de l'invention.

L'invention concerne des perfectionnements apportés à ces dispositifs dans le but d'en améliorer le fonctionnement et le rendement dans les fournils et afin de permettre de les restructurer à moindre coût.

L'invention concerne un dispositif de pétrin malaxeur selon la revendication 1 du genre comprenant un outil tournant dans une cuve non tournante et basculante pour le vidage de la pâte dans un bac mobile repris par un élévateur ou plus directement par élévation du pétrin malaxeur fermenteur au-dessus de la trémie d'une peseuse volumétrique, caractérisé par le fait qu'il dispose en complément de l'outil tournant entraîné par une transmission à fort couple, d'un deuxième outil en rotation libre entraîné par le flux de pâte à vitesse moindre régulée par un frein de manière à réaliser un pétrissage à mouvements corotatifs pour le respect des fibres.

Selon l'invention le réglage du différentiel des vitesses par le frein agit sur l'intensité des pétrissages au choix de l'utilisateur. Il permet également une souplesse d'utilisation pour des pâtes de consistances viscoélastiques très différentes selon les farines utilisées et le pourcentage d'eau de base à 60% qui peut varier de 48% à 80% du poids des pulvérulents. L'intégration d'un contre bras à rotation libre entraîné par le flux de pâte simplement à vitesse plus lente que celle du bras motorisé tournant corrélativement préserve les fibres des pâtes. Le réglage économique de la vitesse de rotation du contre bras, donc de l'intensité des pétrissages malaxages, par un frein plus économique qu'une deuxième transmission augmente les résultats avec une plus grande plage d'utilisation.

De plus, à un moment où le secteur de la panification se dirige vers des techniques de fermentation lente entre 8 et 16° pendant et selon les temps de repos des professionnels de 12 à 48 heures : pour un travail de jour et pour avoir des pains chauds toute la journée et plus de saveur, il se trouve que les systèmes de climatisation de diffusion qui ont été développés pour le secteur vinicole (biotechnologie ayant des similitudes avec les pâtes de panification) sont aptes à refroidir le local de préparation des pâtes où se trouvent le ou les pétrins malaxeurs fermenteurs et peuvent être aisément utilisés (en limitant le volume des chambres de fermentation) à la fabrication des levains pâteux, où il suffit d'enclencher après pétrissage, soit par cycles programmables (par exemple une minute toutes les trente minutes) à partir du programmateur du pupitre de commande des programmations uniquement basées sur des temps et non sur des écarts de température du levain pâteux des cycles de rotation lente, soit en continu et en vitesse de rotation extrêmement lente (frein libéré), afin d'activer les fibres fragiles et d'introduire de l'air pour réactiver le processus fermentaire et ainsi éviter la dégradation des levains pâteux devenant trop acides, tout en renforçant la fabrication des arômes.

Suivant une autre caractéristique de l'invention, l'intérieur de la cuve, par exemple en acier, est muni, par un procédé de fabrication dénommé « rotomoulage », d'un épais revêtement en matériau antiadhérent de qualité alimentaire en PEHD pour faciliter le vidage de la pâte collante, ledit revêtement n'imposant pas l'emploi d'acier inoxydable à polir. La cuve peut être avantageusement conçue avec des congés dans les angles pour faciliter son nettoyage, avec une corne en plastique et disposer d'un bec dépassant la hauteur de la cuve pour faciliter le vidage de la masse de pâte, notamment lors du basculement de la cuve au-dessus de la trémie d'une peseuse, afin d'être en position idéale.

Suivant une autre caractéristique de l'invention le bac à roulette de réception de pâte, à double parois est muni d'un revêtement antiadhérent de qualité alimentaire, par exemple en PEHD, au moyen d'un procédé dénommé « rotomoulage ».

Suivant une autre caractéristique de l'invention, on a prévu, à chaque extrémité de la branche de chaque bras une forme susceptible de rabattre le flux de pâte vers le centre de la cuve dans le sens unique de rotation corotative.

Suivant une autre caractéristique de l'invention, le bras motorisé a une branche hélicoïdale en forme de «s » favorisant l'orientation du flux de pâte vers le centre de la cuve de chaque côté du bras, angle d'hélicoïde de l'ordre et limité à 160/195° afin d'envisager, avec un capteur, des arrêts positionnés de la branche du bras en position haute pour faciliter le vidage de la cuve lors de son basculement.

Suivant une autre caractéristique de l'invention, le bras à rotation libre, dénommé contre bras et le bras motorisé forment, à leurs extrémités inverses côté serrage et côté guidage, des sections progressives de leurs branches respectives bien plus fortes côté attache et plus faibles côté guidage.

Suivant une autre caractéristique de l'invention, les bras, réalisés par exemple en fonderie d'alliage léger de qualité alimentaire, sont munis d'inserts de renforts à leurs attaches d'extrémités, par exemple en bronze ou en acier inoxydable antigrippant, pour remplacer éventuellement la mise en place de bagues antiadhérentes, assurant la rotation des bras côtés guidage et supportant la pression des élément de serrage côté entraînement et, de surcroît, pour éviter ou faciliter la reprise d'usinage après fonderie.

Suivant une autre caractéristique de l'invention, l'ensemble de freinage est, de préférence, composé d'une poignée de réglage fixée sur une tige filetée, de préférence inclinée, traversant un palier taraudé, lui-même fixé sur l'une des deux joues du bâti reliant, à l'extrémité de la tige filetée usinée traversant une bague autolubrifiante, le porte garniture et la garniture en appui sur le moyeu de l'arbre du contre bras, tout autre moyen de freinage étant également envisagé.

Suivant une autre caractéristique de l'invention, le basculement de la cuve est assuré, de préférence, par une roue pneumatique gonflée en appui sur la paroi extérieure de la cuve, ladite roue pneumatique étant entraînée, de préférence, par un motoréducteur compact de grande réduction, de type cycloïde à deux étages ou planétaire à trois trains d'engrenages. boulonné au bâti.

Suivant une autre caractéristique de l'invention les deux pieds du bâti, de préférence en tube rectangulaire, sont disposes à l'extérieur des deux joues du bâti, afin de laisser un maximum d'espace au bac mobile de réception de pâte, tout en limitant la largeur des joues.

Suivant une autre caractéristique de l'invention, les deux capots latéraux, par exemple thermoformés, coiffent les joues de forte épaisseur, s'articulent sur des charnières, l'un des capots intégrant, en partie supérieure inclinée, le boîtier de commande du pétrin malaxeur fermenteurs.

Suivant une autre caractéristique de l'invention, un écran de sécurité relevable intègre un ensemble d'arrivée d'eau composé de flexibles raccords, vanne ou électrovanne cébitmètre et de deux buses spéciales pour favoriser le mélange air/eau pulvérisé important en phase de frasage et, par conséquent, le développement des arômes lors de la fermentation.

Suivant une autre caractéristique de l'invention, la double parois en PEHD du bac mobile est remplie de mousse isolante, tandis que le matériau dudit bac mobile obtenu par rotomoulage, entoure le châssis métallique intérieur sur lequel est plaquée une trappe coulissante qui, en position ouverte, s'intègre parfaitement dans la forme basse du bac mobile côté poignées, le châssis métallique dudit bac mobile étant en tube rectangulaire creux disposé en partie inférieure du bac mobile pour permettre la mise en place des deux fourches d'un gerbeur électrique de diffusion en sa position la plus basse possible avant élévation au-dessus d'une trémie peseuse ou au-dessus d'une table à hauteur d'une diviseuse.

Suivant une autre caractéristique de l'invention, la trappe coulissante du bac mobile est guidée par un ensemble de diffusion comprenant deux guidages, quatre douilles, une vis de commande, une douille écrou et un volant pouvant être remplacé par un petit moteur en version à ouverture/fermeture automatique de la trappe à actionner pour le vidage intégral de la pâte dans la trémie de peseuse.

Suivant une autre caractéristique de l'invention, le bac mobile est remplacé, en version automatique intégrale par une table élévatrice de diffusion équipée, par exemple, de galets sur rails susceptibles de déplacer horizontalement le pétrin malaxeur fermenteur avant le basculement de la pâte directement dans une trémie de peseuse volumétrique avec un pupitre de commande.

Suivant une autre caractéristique de l'invention, la trappe coulissante du bac mobile est guidée par un ensemble de diffusion comprenant deux guidages, quatre douilles, une vis de commande, une douille écrou et un volant pouvant être remplacé par un petit moteur en version à ouverture/fermeture automatique de la trappe à actionner pour le vidage intégral de la pâte dans la trémie de peseuse.

Suivant une autre caractéristique de l'invention, le bac mobile est remplacé, en version automatique intégrale par une table élévatrice de diffusion équipée, par exemple, de galets sur rails susceptibles de déplacer horizontalement le pétrin malaxeur fermenteur avant le basculement de la pâte directement dans une trémie de peseuse volumétrique avec un pupitre de commande indépendant. L'élévation et le déplacement de la table élévatrice, de préférence hydraulique et le basculement de la cuve équipée d'un bec sont actionnés soit par un motoréducteur, soit par un vérin électrique ou électro-hydraulique ou, de façon plus économique, par un vérin pneumatique alimenté par un réseau d'air comprimé dont les industries ou semi-industries sont généralement équipées.

Suivant une autre caractéristique de l'invention sur le côté en partie basse de la cuve basculante est avantageusement disposé un capteur de température relié par un fil électrique isolant et souple à l'afficheur du pupitre de commande, tout comme le fil électrique du débitmètre d'eau de l'écran pour dosage. plus constante dans la pâte et plus de régularité de vitesse quelle que soit sa position en rotation dans la cuve.

Suivant un autre perfectionnement apporté aux pétrins fermenteurs horizontaux de panification le basculement de la cuve est assuré par un groupe de motoréducteur frein compact de type cycloïde ou planétaire entraînant par galets une courroie fixée à la cuve et permettant son basculement pour vidage et relevage avec une meilleure intégration,

Suivant un autre perfectionnement apporté aux pétrins fermenteurs horizontaux de panification, l'arrivée d'eau, son électrovanne et son capteur de débit sont fixés, de préférence mais non exclusivement, sur l'une des deux joues épaisses avec un raccord tournant sur l'écran de sécurité assurant également l'arrivée d'eau à deux buses de pulvérisation spéciales favorisant la liaison eau/farine/air.

Suivant un autre perfectionnement apporté aux pétrins fermenteurs horizontaux de panification, un coffret électrique contenant les parties électriques et le variateur de fréquence est intégré du côté transmission avec fixation sur joue.

### Description des dessins.

La figure 1 est une vue schématique d'un côté du pétrin malaxeur fermenteur selon l'invention, montrant le dispositif de frein du bras à rotation libre.
La figure 2 est une vue de l'autre côté du pétrin malaxeur fermenteur dont il s'agit montrant le dispositif de transmission du bras motorisé.
La figure 3 est une vue de côté en coupe du pétrin malaxeur fermenteur horizontal.
La figure 4 est une vue de face du pétrin malaxeur fermenteur, côté capot et pupitre de commande.
La figure 5 représente schématiquement l'ensemble d'une table élévatrice du pétrin malaxeur fermenteurs.
La figure 6 montre une peseuse vue de dessus avec sa trémie.
La figure 7 est une vue de détail en coupe du côté de la transmission du pétrin malaxeur fermenteur.
La figure 8 est une vue de détail en coupe du côté du dispositif de frein que comporte le pétrin malaxeur fermenteur.
La figure 9 représente les formes du bras motorisé et du contre bras à rotation libre du pétrin malaxeur fermenteur.
La figure 10 est une vue de face en coupe du pétrin malaxeur fermenteur.
La figure 11 montre l'écran d'affichage des commandes électriques du pétrin malaxeur fermenteur.
La figure 12 montre le détail de la trappe coulissante d'un bac mobile.

### Description des modes de réalisation préférés de l'invention.

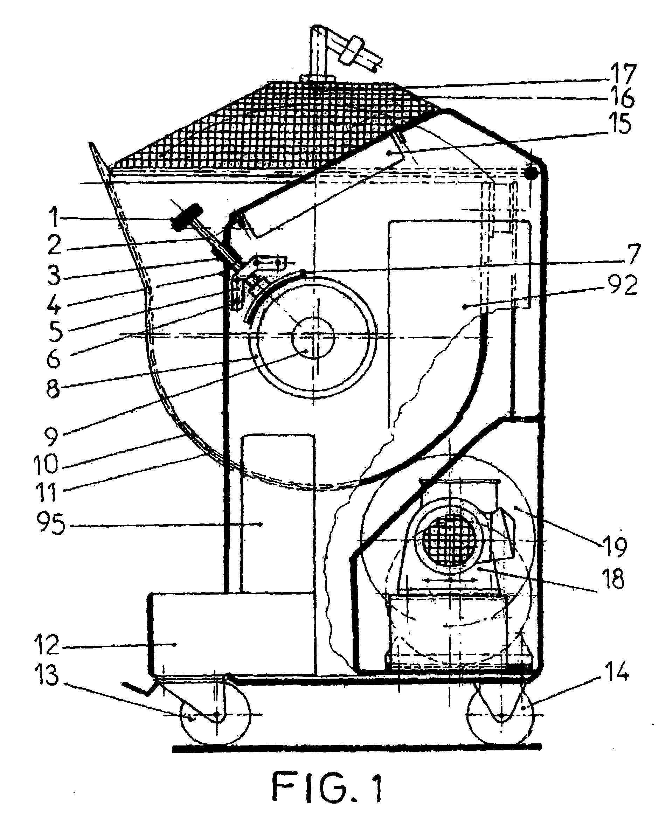

Comme l'illustre la figure 1, l'ensemble des dispositifs constituant le frein comprend une poignée de réglage 1, une tige filetée 2, une bague de protection 3 intégrée au capot latéral, un palier 5 taraudé fixé sur l'une des joues 6, un porte garniture 7, un moyeu 8 fixé à l'arbre 9 du contre bras, une cuve en acier 10 avec son revêtement 11 rotomoulé deux pieds 12 du bâti, deux roulettes à frein 13, deux roulettes fixes 14, l'ensemble d'un boîtier de commande 15 intégré au capot latéral 4, un écran de sécurité 16 relevable et l'arrivée partielle d'eau à l'une des deux buses 17 fixées sur l'écran de sécurité, un motoréducteur 18 et la roue pneumatique 19 de basculement de la cuve 10.

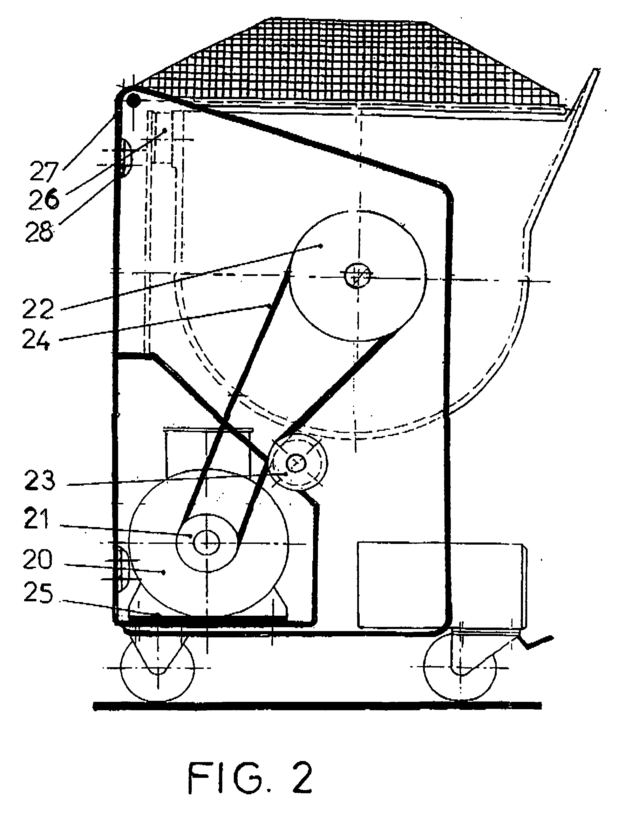

Comme le montre la figure 2, l'ensemble des dispositifs de transmission de l'outil motorisé 30 comporte un moteur frein 20, une poulie motrice 21, une poulie réductrice 22, un système de galet tendeur 23, une courroie 24, un tapis antivibratoire 25, deux amortisseurs de cuve 26, un capot latéral 27 et, à titre d'exemple, deux charnières 28.

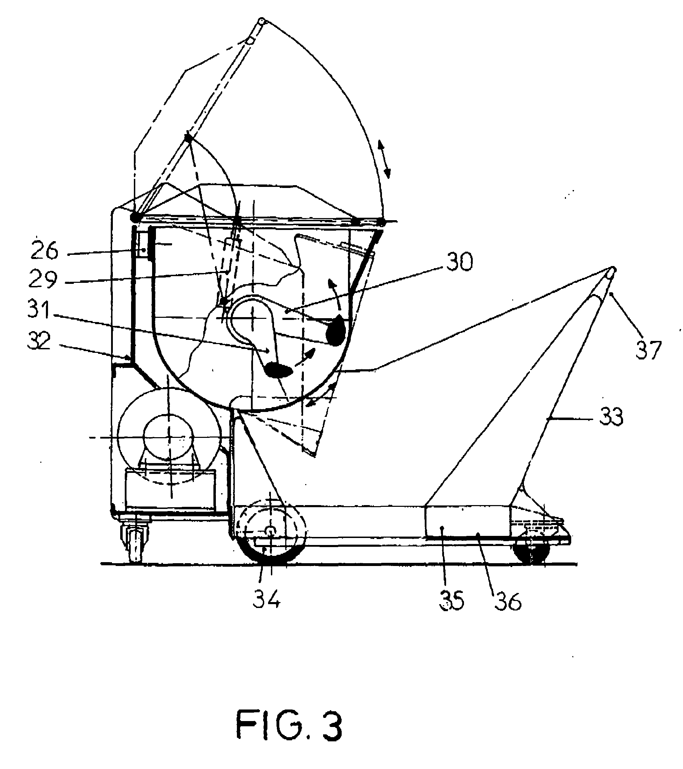

La pétrin malaxeur fermenteur horizontal représenté figure 3. comprend la cuve en acier recouverte d'un matériau antiadhérent de qualité alimentaire, d'un écran relevable équipé de deux vérins d'assistance à gaz 29, d'un bras motorisé 30, d'un contre bras 31, d'un amortisseur de cuve 26, d'un bâti 32, d'un bac mobile 33 sur roulettes 34 avec son châssis 35, sa trappe 36 et ses poignées 37.

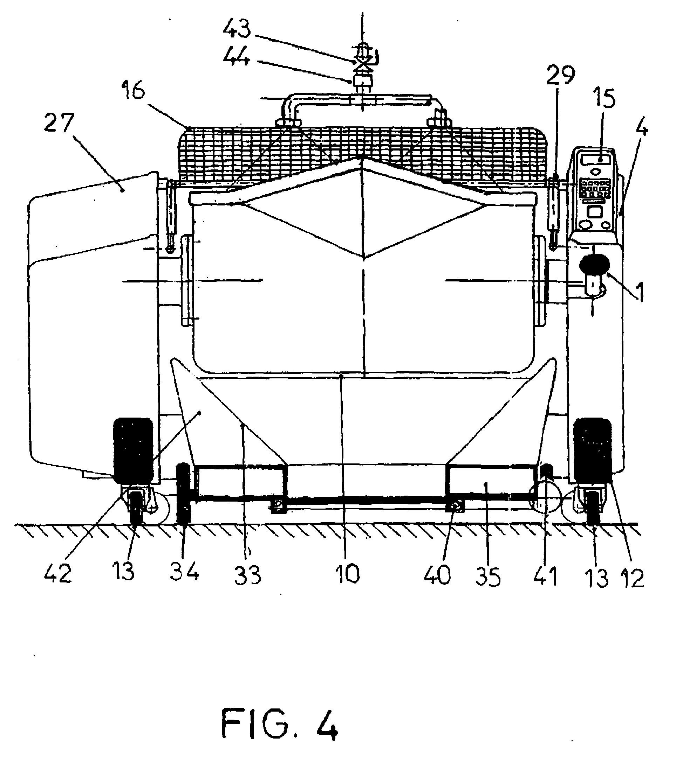

L'ensemble des dispositifs représentés figure 4 en vue de face comprend un capot latéral de transmission 27, un capot latéral 4 des commandes, deux pieds du bâti 12, un pupitre de commande 15, une poignée de commande de frein 1, deux roulettes frein 13 du bâti, l'écran relevable 16, la cuve 10, le bac mobile 33, les guidages de trappe 40, un volant de manoeuvre de trappe 41, d'un châssis de bac mobile 35, de mousse isolante 42, de roulettes 34, d'une vanne ¼ de tour 43 et d'un débitmètre 44.

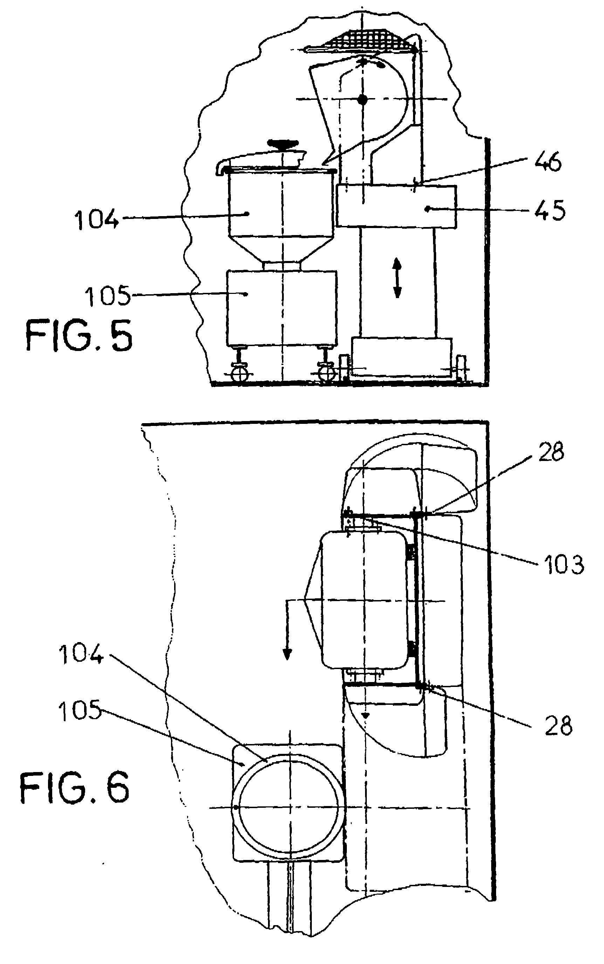

Comme le montre la figure 5, le pétrin malaxeur fermenteur est situé au-dessus de la trémie 104 d'une peseuse volumétrique avant le basculement de la cuve équipée d'un bec pour le vidage en direct de la masse de pâte, ledit pétrin étant boulonné sur le plateau 46 d'une tablé élévatrice 45 coulissante horizontalement.

Cet ensemble est représenté figure 6 en vue de dessus ou l'on voit la peseuse 105 avec sa trémie 104 et le pétrin avec un capteur de sécurité 103 et les charnières 28.

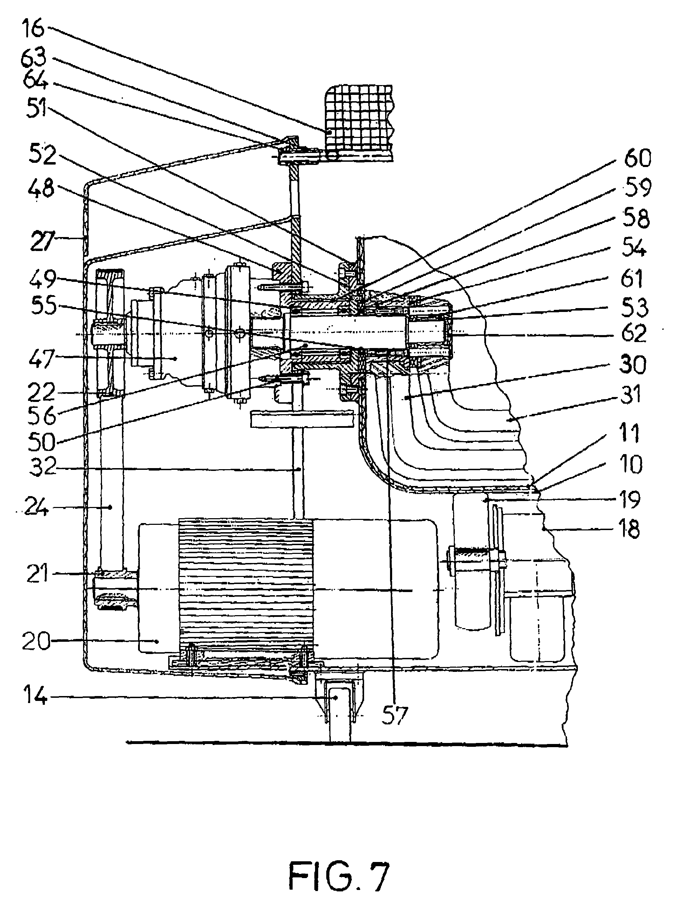

Les moyens de transmission représentés figure 7 comprennent, sous un capot latéral 27, un motoréducteur de basculement 18, une roue pneumatique 19, la cuve acier 10 et son revêtement 11, le bras motorisé 30, le contre bras 31, un moteur frein 20, une poulie motrice 21, une courroie 24, une poulie réductrice 22, un réducteur planétaire 47, une bride 48 de réducteur porte roulements 49 directement fixée au réducteur et au bâti par des vis 50, une bride de cuve 51, une contre bride de cuve 52, une bague autolubrifiante 53 et 54, un joint d'arbre 55, un arbre de transmission 56 à une extrémité cannelée, un élément de serrage 57, un insert de bras motorisé 58, une rondelle autolubrifiante 59, une bague à collerette autolubrifiante 60), un insert de contre bras 61, un bouchon 62, une bague d'écran 63, un écrou d'écran 64, un écran 16, une roulette 14 fixe de bâti et un bâti 32.

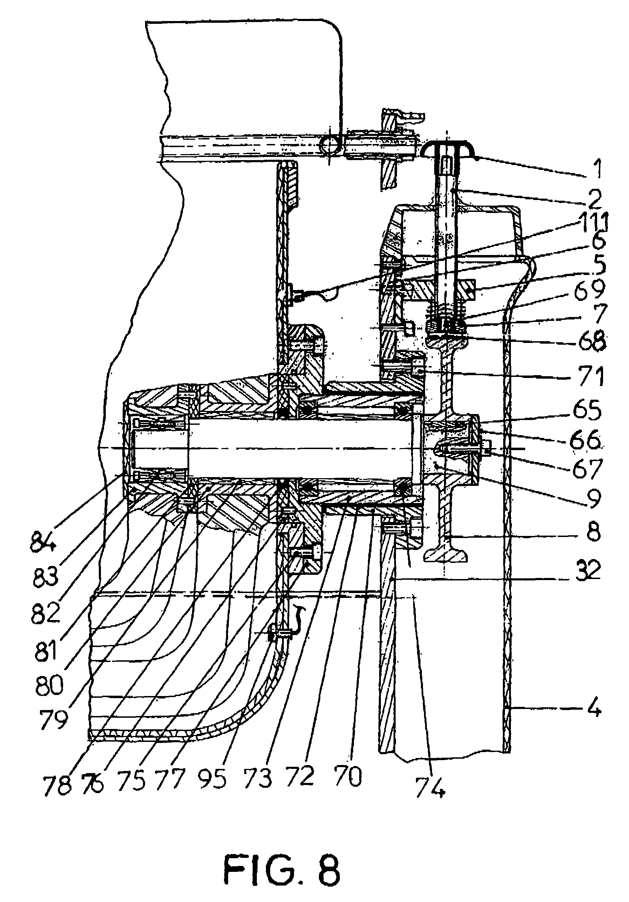

Du côté des commandes électriques, le système de frein représente figure 8 comprend le capot latéral 4, le moyeu de frein 8 fixé sur l'arbre 9 du contre bras par une clavette 65 et maintenu latéralement par une rondelle 66, une vis 67, une garniture 68 collée sur le porte garniture 7 dans lequel est maintenue la tige filetée usinée 2 par une rondelle et une vis fraisée 69, une bague à collerette autolubrifiante permettant la rotation de la tige filetée traversant le palier taraudé 5 fixé sur la joue 6 du bâti 32 et reliée à la poignée de commande du frein 1, une bride 70 fixée par des vis 71 sur la joue du bâti dans laquelle est placée une bague à collerette autolubrifiante 72 qui enserre un fourreau 73 et deux roulements 74, une bride de cuve 77 fixée à la cuve par des vis 75, une rondelle autolubrifiante 76, un joint 78, une bague autolubrifiante 79, un insert 80, une bague autolubrifiante 31, un élément de serrage 82, un insert 83, un cache 84 sur le contre bras et, sur la paroi de la cuve à un endroit préférentiel, un capteur de température 95 et un capteur de position 111.

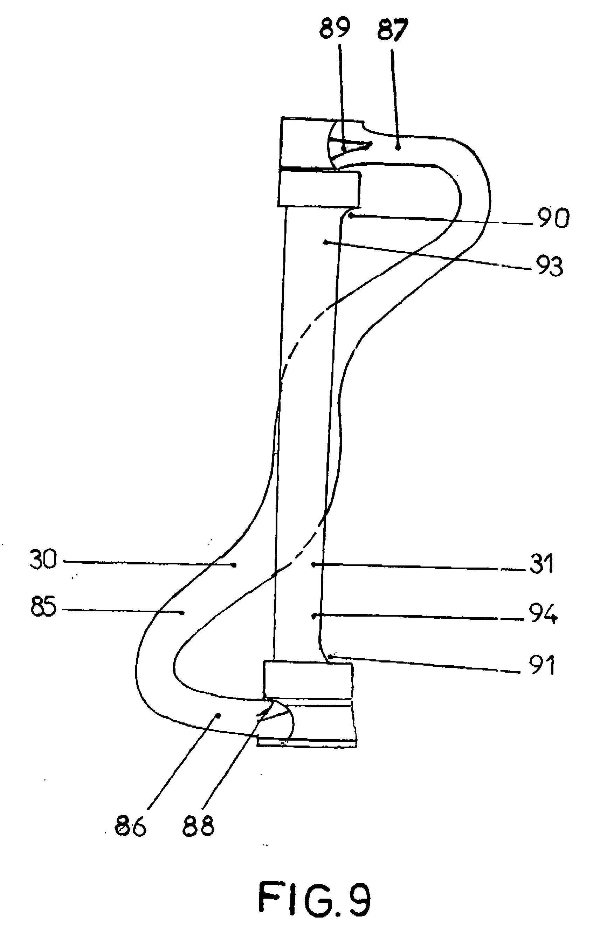

La figure 9 montre les dessins du bras motorisé et du contre bras qui sont en forme de « s » hélicoïdale 85 à sections progressives 86 et 87, ainsi que les formes d'extrémités 88 et 89 du bras motorisé 30 et les formes d'extrémités 90 et 91 et les branches à sections progressives 93 et 94 du contre bras 31.

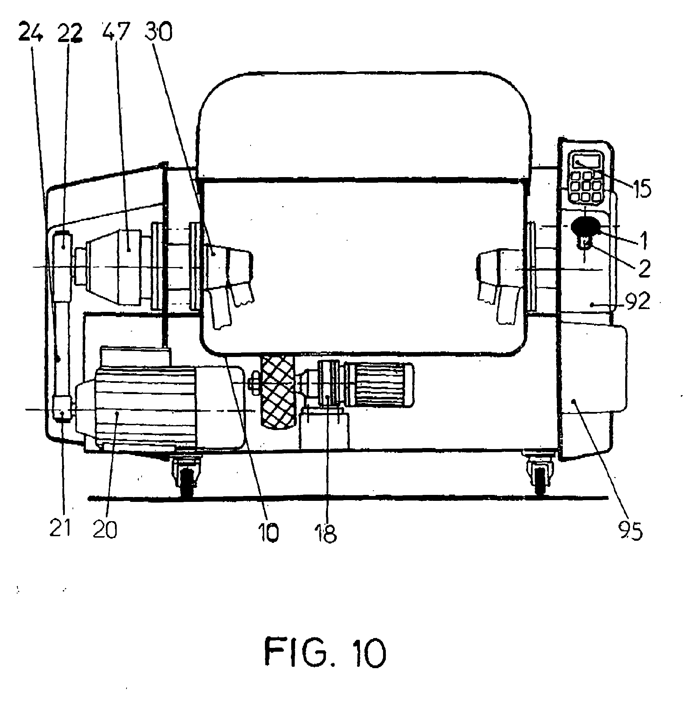

L'ensemble des dispositifs que représente la figure 10 comprend le bras motorisé 30 entraîné par le réducteur planétaire 47, la poulie 22, la courroie 24, la poulie motrice 21 et le moteur frein 20. L'autre motoréducteur 18 équipé d'une roue pneumatique permet le basculement de la cuve 10 pour son vidage. Sur l'un des capots latéraux figure la poignée de frein 1, la tige filetée 2, l'ensemble de boîtier de commande à affichage 15 et à programmation, un coffret des autres éléments électriques 92, un variateur de fréquence 95 de l'une des variantes du pétrin malaxeur.

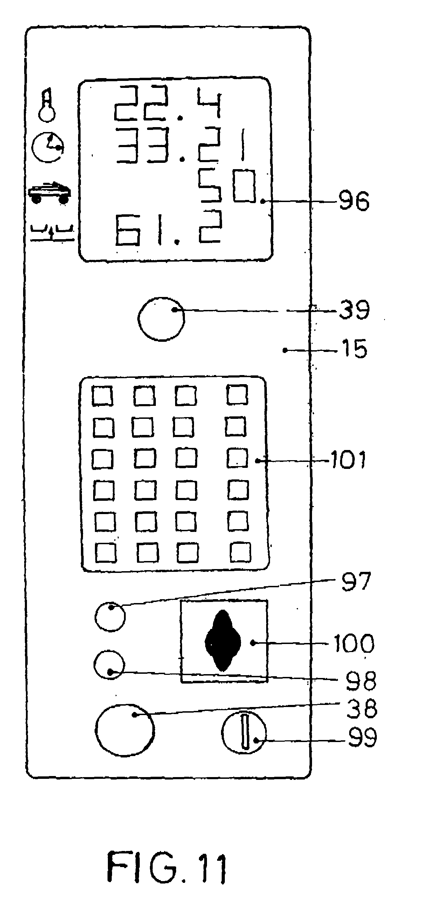

L'ensemble des dispositifs représentés figure 11 comprend un écran d'affichage 96 disposant de plusieurs lignes : une pour le débit d'eau en Kg, une pour le comptage ou le décomptage du temps, une pour la température de la pâte, une pour la vitesse : un coup de poing de sécurité 38, un bouton de potentiomètre 39, deux boutons marche/arrêt 97 et 98, un bouton de maintien 99 pour le basculement de la cuve, un interrupteur de tension 100 et un clavier de programmation 101 à membrane avec des touches à coupelles.

Un gerbeur électrique de diffusion pour soulever les bacs mobiles complète l'équipement.

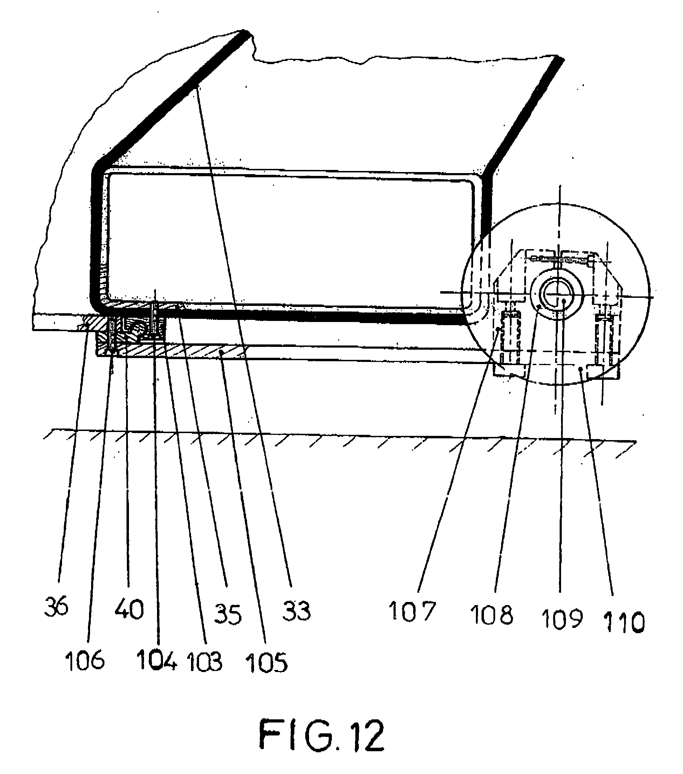

Comme le montre la figure 12, le bac mobile 33 est équipé de la trappe 36 disposée sous son châssis 35 dont le déplacement est commandé par un volant 110 grâce à l'un des deux guidages 40, à l'un des deux supports de guidages 103 fixé au châssis par des vis 104, à une contre plaque 105 reliée d'un côté au guidage et à la trappe par deux vis 106 et, de l'autre côté, à l'une des deux brides 107 support de l'un des deux écrous 108 d'une vis 109 fixée sur l'un des deux côtés du châssis.

Les dispositifs décrits concernent particulièrement les pétrins malaxeurs fermenteurs horizontaux à combinaison d'outils à mouvements corotatifs régulés de préférence par un frein en vitesse différentielle et en intensité de forces rela tives dans une cuve revêtue par un épais matériau antiadhérent de qualité alimentaire rotomoulé pour faciliter, lors du basculement de la cuve, le vidage intégral de la masse de pâte dans l'un des bacs mobiles en matériau antiadhérent de qualité alimentaire rotomoulé repris ensuite par un simple élévateur de diffusion pour vidage soit dans la trémie d'une peseuse volumétrique, soit sur une table à hauteur d'une diviseuse par l'ouverture de la trappe du bac. Dans cette configuration économique, deux à trois bacs mobiles permettent de stocker les masses de pâte de quinze à quarante minutes, temps favorable à la production d'arômes et à la pousse des pâtes lors des phases de fermentation et ce avant de diviser les masses de pâte en pâtons.

En version automatisée le pétrin malaxeur fermenteur horizontal est directement boulonné sur une table élévatrice hydraulique de diffusion équipée de galets sur rails afin de pouvoir assurer un déplacement horizontal et de placer le pétrin malaxeur juste au-dessus de la trémie d'une peseuse volumétrique avant le basculement de la cuve pour vidage intégral de la masse de pâte, orientée par le bec de la cuve.

L'invention concerne également des dispositifs sur les pétrins verticaux pour les secteurs : pâtisserie, hôtellerie, laboratoire et particuliers, en volume de cuve plus faible, toujours avec un outil motorisé et un contre outil à rotation libre et régulé en vitesse par un frein.

## Revendications

1. Dispositif de pétrin malaxeur de pâtes viscoélastiques du genre comprenant un bras moteur (30) tournant dans une cuve basculante et non tournante (10) pour le vidage de la pâte dans un bac mobile (33) repris par un élévateur (45) ou plus directement par élévation du dispositif au-dessus de la trémie (104) d'une peseuse volumétrique (105) et pouvant être disposé dans un local climatisé de préparation des pâtes, **caractérisé par le fait qu'**on associe au bras tournant (30) entraîné par une transmission (20-24) un contre bras (31) en rotation libre entraîné par le flux de pâte à vitesse moindre régulée par un frein (1-8).

2. Dispositif selon la revendication 1, **caractérisé en ce que** le bras (30) a une forme hélicoïdale en «S » ce qui tend à ramener le flux de pâte vers le centre de la cuve (10).

3. Dispositif selon les revendications 1 et 2, **caractérisé en ce que** le bras (30) et le contre bras (31) ont des formes d'extrémités (88,89) ramenant le flux de pâte vers le centre de la cuve (10) dans le sens de rotation unique.

4. Dispositif selon les revendications 2 et 3, **caractérisée en ce que** le bras (30) et le contre bras (31) ont des sections de dimensions progressives plus fortes côté attache et plus faibles côté guidage.

5. Dispositif selon les revendications 2 à 4, **caractérisé en ce que** le bras (30) et le contre bras (31) venus de fonderie en alliage léger de qualité alimentaire sont renforcés à leurs extrémités d'attache et de guidage par des inserts (58,61,80,83) préalablement usinés en acier inoxydable antigrippant.

6. Dispositif selon les revendications précédentes **caractérisé en ce qu'**un programmateur (101) du boîtier de commande (15) permet, en pétrin et en fermenteur, des programmations de cycles de rotations et d'arrêts à partir de temps, la bonne température constante des produits pâteux étant assurée par climatisation.

7. Dispositif selon la revendication 1, **caractérisé en ce que** le freinage du contre bras (31) peut être assuré par une transmission équipée d'un variateur de vitesse.

8. Dispositif selon les revendications 1-5, **caractérisé en ce qu'**un capteur de position (111) permet l'arrêt du bras motorisé (30), branché en position haute de la cuve (10) pour faciliter le vidage de la pâte lors du basculement de la cuve.

9. Dispositif selon la revendication 1, **caractérisé en ce que** la cuve basculante (10) est coiffée par un écran relevable (16) intégrant un ensemble d'arrivée d'eau par des flexibles avec un capteur de débit (44) associé à une vanne et deux buses (17), ledit capteur étant relié à un afficheur (96) d'un boîtier de commande (15).

10. Dispositif selon la revendication 1, **caractérisé en ce que** l'ensemble frein du contre bras (31) comprend une poignée (1) de réglage d'une tige filetée inclinée (2) traversant un palier (5) reliant un porte garniture (7) en pression sur un moyeu (8) fixé sur l'arbre (9) du contre bras (31) en rotation libre.

11. Dispositif selon la revendication 1, **caractérisé en ce que** l'élévation et la mise en place du pétrin malaxeur au-dessus de la trémie (104) d'une peseuse volumétrique (105) sont assurée par une table élévatrice hydraulique de diffusion (45) coulissante.

12. Dispositif selon la revendication 1, **caractérisé en ce que** le basculement de la cuve (10) est assuré par une roue pneumatique gonflée (19) en appui sur la paroi de ladite cuve,

13. Dispositif selon les revendications 1 et 12, **caractérisé en ce que** la roue (19) de basculement de la cuve (10) est entraîné par un motoréducteur (18) compact de grande réduction de type cycloïde ou planétaire intégré au bâti (32).

14. Dispositif selon les revendications 1 et 9, **caractérisé en ce qu'**une sonde thermométrique (95), reliée à l'afficheur (96) du boîtier de commande (15) par un fil souple, est disposée en partie basse de l'une des parois de la cuve (10) côté pupitre juste après le rayon de la cuve.

15. Dispositif selon la revendication 1, **caractérisé en ce que** la cuve (10) réalisée en acier inoxydable est recouverte d'un épais matériau (11) antiadhérent de qualité alimentaire.

16. Dispositif selon la revendication 1, **caractérisé en ce que** le bac mobile (33) de réception de pâte est en matériau antiadhérent de qualité alimentaire formant des double parois remplie de mousse isolante (42).

17. Dispositif selon les revendication 1 et 16, **caractérisé en ce que** le bac mobile (33) intègre, dans sa partie inférieure, un châssis tubulaire rectangulaire (35) servant de renfort et de maintien d'une trappe de vidage (36) permettant l'introduction des fourches d un élévateur en position basse et, dans sa partie supérieure, des poignées (37).

18. Dispositif selon les revendications 1 et 16 **caractérisé en ce que** l'élévation des bacs mobiles (33) est assurée par un gerbeur électrique (102) de diffusion.

19. Dispositif selon la revendication 1, **caractérisé en ce que** le réducteur compact de type planétaire (47) est directement disposé sur l'arbre du bras motorisé (30).

20. Dispositif selon les revendications 1 et 17 **caractérisé en ce que** le déplacement de la trappe de vidage (36) du bac mobile (33) est commandé par un volant (110).

21. Dispositif selon la revendication 1, **caractérisé en ce que** des capots latéraux (4,27) s'articulent sur des charnières (28), le capot (4) intégrant le boîtier de commande (15), la tige filetée (2) du frein du contre bras (31), un coffret électrique (92) et un variateur de fréquence (95), tandis que l'autre capot (27) ouvre l'ensemble de la transmission avec un capteur de sécurité (103).

## Claims

1. A device forming a kneader-mixer of viscoelastic dough of the type comprising a drive arm (30) rotating in a dumping non-rotating tank (10) for discharging the dough into a mobile tank (33) lifted by a lifting table (45) or more directly by the lifting of the device above the hopper (104) of a volume weighing machine (105) and adapted to be placed in air-conditioned premises for the preparation of dough, **characterized in that** a free rotating counter arm (31) driven by the flow of dough at a lower velocity adjusted by a brake (1 to 8) is associated to the rotating arm (30) driven by a transmission (20 to 24).

2. A device according to claim 1, **characterized in that** the arm (30) has an "S" helicoidal shape, which tends to bring back the flow of dough towards the centre of the tank (10).

3. A device according to claim 1 and 2, **characterized in that** the arm (30) and the counter arm (31) have end shapes (88, 89) bringing back the flow of dough towards the centre of the tank (10) in the single direction of rotation.

4. A device according to claims 2 and 4, **characterized in that** the arm (30) and the counter arm (31) have sections having greater progressive dimensions on the fixing side and smaller progressive dimensions on the guiding side.

5. A device according to claims 1 to 4, **characterized in that** the food grade light alloy arm (30) and counter arm (31) cast in one piece are reinforced, at their fixing and guiding ends by previously machined stainless steel anti-seizing inserts (58, 61, 80, 83).

6. A device according to the preceding claims, **characterized in that** a programmer (101) of the control box (15) enables to program rotation and stop time cycles in kneading and fermenting modes, the correct constant temperature of the pasty products being provided by an air conditioning system.

7. A device according to claim 1, **characterized in that** the braking of the counter arm (31) may be provided by a transmission provided with a speed drive.

8. A device according to claims 1 to 5, **characterized in that** a position sensor (111) enables to stop the powered arm (30) connected at the upper part of the tank (10) for facilitating the discharging of the dough upon the dumping of the tank.

9. A device according to claim 1, **characterized in that** the dumping tank (10) is covered with a lift screen (16) incorporating an assembly for the supply of water through flexible hoses, with a flow sensor (44) being associated with a valve and two nozzles (17), said sensor being connected to a display (96) of a control box (15).

10. A device according to claim 1, **characterized in that** the braking assembly of the counter arm (31) includes a handle (1) for adjusting an inclined threaded rod (2) going through a bearing (5) connecting a packing retainer (7) pressing on a hub (8) fixed on the shaft (9) of the free rotating counter arm (31).

11. A device according to claim 1, **characterized in that** the lifting and the positioning of the kneader-mixer above the hopper (104) of a volume weighing machine (105) are provided by a sliding diffusion hydraulic lifting table (45).

12. A device according to claim 1, **characterized in that** the dumping of the tank (10) is provided by an inflated pneumatic wheel (19) resting on the wall of said tank.

13. A device according to claims 1 and 12 **characterized in that** the tank (10) dumping wheel (19) is driven by a compact moto-reducer (18) having a large reduction of the cycloid or planetary type incorporated in the frame (32).

14. A device according to claims 1 and 9, **characterized in that** a temperature probe (95) connected to the display (96) of the control box (15) by means of a flexible wire, is positioned in the lower part of one of the walls of the tank (10), on the console side, just after the tank rack.

15. A device according to claim 1, **characterized**
**in that** the stainless steel tank (10) is coated with a thick food grade non-stick material (11).

16. A device according to claim 1, **characterized in that** the paste reception mobile tank (33) is made of a food grade non-stick material forming a jacket filled with insulating foam (42).

17. A device according to claims 1 and 16, **characterized in that** the mobile tank (33) incorporates in the lower part thereof, a rectangular tubular frame (35) to be used for the reinforcement and the holding of a discharge gate (36) enabling the introduction of the forks of a fork lift truck in the lower position thereof, and in the upper part thereof, handles (37).

18. A device according to claims 1 and 16, **characterized in that** the lifting of the mobile tanks (33) is provided by a diffusion electric stacker (102).

19. A device according to claim 1, **characterized in that** the compact moto-reducer of the planetary type (47) is directly positioned on the shaft of the powered arm (30).

20. A device according to claims 1 and 17, **characterized in that** the displacement of the discharge gate (36) of the mobile tank (33) is controlled by a wheel (110).

21. A device according to claim 1, **characterized in that** side covers (4, 27) are articulated by hinges (28), the cover (4) incorporating the control box (15), the threaded rod (2) of the counter arm (31), an electric switch box (92) and a frequency drive (95), whereas the other cover (27) opens the transmission assembly with a safety sensor (103).

## Patentansprüche

1. Vorrichtung zum Kneten und Mischen von viskoelastischen Teigen von der Art mit einem Antriebsarm (30), der in einer nicht drehenden Kippwanne (10) zum Entleeren des Teigs in einen beweglichen Behälter (33) dreht, der von einem Hebewerk (45) aufgenommen wird, oder direkter durch Heben der Vorrichtung über den Trichter (104) einer volumetrischen Abfüllwaage (105), und die in einem klimatisierten Raum für die Vorbereitung von Teigen aufgestellt werden kann, **dadurch gekennzeichnet, daß** dem von einer Kraftübertragung (20 - 24) angetriebenen Dreharm (30) ein frei drehender Gegenarm (31) zugeordnet wird, der vom Teigfluß mit geringerer durch eine Bremse (1 - 8) regulierten Geschwindigkeit angetrieben wird.

2. Vorrichtung nach Anspruch 1, **dadurch gekennzeichnet, daß** der Arm (30) eine schraubenförmige "S" Form hat, damit der Teigfluß zur Mitte der Wanne (10) zurückgeführt wird.

3. Vorrichtung nach den vorstehenden Ansprüchen 1 und 2, **dadurch gekennzeichnet, daß** der Arm (30) und der Gegenarm (31) Endformen (88, 89) haben, die den Teigfluß zur Mitte der Wanne (10) in der einzigen Drehrichtung zurückführen.

4. Vorrichtung nach den vorstehenden Ansprüchen 2 und 3, **dadurch gekennzeichnet, daß** der Arm (30) und der Gegenarm (31) Querschnitte mit progressiven Abmessungen haben, die an der Seite der Befestigung größer und an der Seite der Führung kleiner sind.

5. Vorrichtung nach einem beliebigen der vorstehenden Ansprüche 2 bis 4, **dadurch gekennzeichnet, daß** der Arm (30) und der Gegenarm (31) aus einem Guß aus Leichtmetallegierung in Nahrungsmittelqualität an ihren befestigungsseitigen und führungsseitigen Enden durch Inserts (58, 61, 80, 83) verstärkt sind, die vorher aus fressenverhütendem Edelstahl bearbeitet wurden.

6. Vorrichtung nach einem beliebigen der vorstehenden Ansprüche, **dadurch gekennzeichnet, daß** ein Programmiergerät (101) des Steuergehäuses (15) in der Knetvorrichtung und dem Gärbehälter Programmierungen von Dreh- und Abschaltzyklen nach Zeit ermöglicht, wobei die richtige konstante Temperatur der Teigprodukte durch die Klimatisierung sichergestellt wird.

7. Vorrichtung nach Anspruch 1, **dadurch gekennzeichnet, daß** das Bremsen des Gegenarms (31) durch eine mit einem Regelantrieb ausgerüstete Kraftübertragung sichergestellt werden kann.

8. Vorrichtung nach den vorstehenden Ansprüchen 1 - 5, **dadurch gekennzeichnet, daß** ein Positionsgeber (111) das Abschalten des Antriebsarms (30) zuläßt, der in oberer Position der Wanne (10) angeschlossen ist, damit das Entleeren des Teigs beim Kippen der Wanne vereinfacht wird.

9. Vorrichtung nach Anspruch 1, **dadurch gekennzeichnet, daß** die Kippwanne (10) von eines anhebbaren Schirm (16) überdeckt wird, der eine Baugruppe mit Wassereinlaß durch Schläuche mit einem Durchflußgeber (44) einbindet, der mit einem Schieber und zwei Düsen (17) verbunden ist, wobei der besagte Geber mit einem Anzeiger (96) eines Steuergehäuses (15) verbunden ist.

10. Vorrichtung nach Anspruch 1, **dadurch gekennzeichnet, daß** die Baugruppe mit der Bremse des Gegenarms (31) einen Regelgriff (1) einer geneigten Gewindestange (2) umfaßt, die ein Lager (3) durchquert, das einen Belagträger (7) unter Druck auf eine Nabe (8) verbindet, der auf der Welle (9) des frei drehenden Gegenarms (31) befestigt ist.

11. Vorrichtung nach Anspruch 1, **dadurch gekennzeichnet, daß** das Heben und das Einrichten der Knet- und Mischvorrichtung über dem Trichter (104) einer volumetrischen Abfüllwaage (105) von einem gleitenden hydraulischen Hubtisch mit Verteilung (45) gewährleistet werden.

12. Vorrichtung nach Anspruch 1, **dadurch gekennzeichnet, daß** das Kippen der Wanne (10) durch ein aufgepumptes pneumatisches Rad (19) sichergestellt wird, das auf der Wand der besagten Wanne aufliegt.

13. Vorrichtung nach den Ansprüchen 1 und 12, **dadurch gekennzeichnet, daß** das Rad (19) zum Kippen der Wanne (10) von einem Getriebemotor (18) in Kompaktbauweise mit starker Untersetzung von der Art Radlinie oder Zentralrad angetrieben wird, der im Maschinenbett (32) eingebunden ist.

14. Vorrichtung nach einem beliebigen der vorstehenden Ansprüche 1 und 9, **dadurch gekennzeichnet, daß** eine Wärmesonde (95), die durch einen weichen Draht mit dem Anzeiger (96) des Steuergehäuses (15) verbunden ist, am unteren Teil einer der Wände der Wanne (10) pultseitig direkt nach dem Radius der Wanne angeordnet ist.

15. Vorrichtung nach Anspruch 1, **dadurch gekennzeichnet, daß** die aus Edelstahl ausgeführte Wanne (10) mit einem dicken Antihaftmaterial (11) in Lebensmittelqualität abgedeckt ist.

16. Vorrichtung nach Anspruch 1, **dadurch gekennzeichnet, daß** der bewegliche Behälter (33) für die Aufnahme des Teigs aus Antihaftmaterial in Lebensmittelqualität besteht, das mit Isolierschaum (42) gefüllte Doppelwände bildet.

17. Vorrichtung nach einem beliebigen der vorstehenden Ansprüche 1 und 16, **dadurch gekennzeichnet, daß** in den beweglichen. Behälter (33) in seinem unteren Teil ein rechteckiger Rohrrahmen (35) eingebunden ist, der zur Verstärkung und Halterung einer Entleerungsklappe (36) dient, die das Einführen der Gabeln eines Hubwagens in unterer Position zuläßt, und in seinem oberen Teil Handgriffe (37).

18. Vorrichtung nach einem beliebigen der vorstehenden Ansprüche 1 und 16, **dadurch gekennzeichnet, daß** das Heben der beweglichen Behälter (33) durch einen elektrischen Stapelförderer (102) mit Verteilung gesichert wird.

19. Vorrichtung nach Anspruch 1, **dadurch gekennzeichnet, daß** das kompakte Untersetzungsgetriebe von der Art Zentralrad (47) direkt auf der Welle des Antriebsarms (30) angeordnet ist.

20. Vorrichtung nach einem beliebigen der vorstehenden Ansprüche 1 und 17, **dadurch gekennzeichnet, daß** die Verschiebung der Entleerungsklappe (36) des beweglichen Behälters (33) durch ein Handrad (110) gesteuert wird.

21. Vorrichtung nach Anspruch 1, **dadurch gekennzeichnet, daß** die seitlichen Hauben (4, 27) auf Scharnieren (28) gelenkig angebracht sind, wobei die Haube (4) das Steuergehäuse (15), die Gewindestange (2) der Bremse des Gegenarms (31), einen elektrischen Schaltkasten (92) und einen Frequenzvariator (95) einbindet, während die andere Haube (27) die Baugruppe der Kraftübertragung mit einem Sicherheitsfühler (103) abdeckt.
